**Europäisches Patentamt**

(19) **European Patent Office**

**Office européen des brevets**

(11) Veröffentlichungsnummer: **0 159 639**
**B1**

(12) # EUROPÄISCHE PATENTSCHRIFT

(45) Veröffentlichungstag der Patentschrift:
16.03.88

(51) Int. Cl.⁴: **F 16 D 65/12**

(21) Anmeldenummer: **85104486.7**

(22) Anmeldetag: **12.04.85**

(54) **Befestigungsanordnung für Bremsscheiben, insbesondere für Schienenfahrzeuge.**

(30) Priorität: **12.04.84 DE 3413843**

(43) Veröffentlichungstag der Anmeldung:
**30.10.85 Patentblatt 85/44**

(45) Bekanntmachung des Hinweises auf die Patenterteilung:
**16.03.88 Patentblatt 88/11**

(84) Benannte Vertragsstaaten:
**DE FR GB**

(56) Entgegenhaltungen:
**DE-A-2 133 235**
**DE-A-2 828 109**
**DE-A-2 828 137**
**DE-B-1 151 274**
**DE-B-1 258 444**
**FR-A-2 145 172**
**FR-A-2 293 349**

(73) Patentinhaber: **KNORR- BREMSE AG, Moosacher Strasse 80 Postfach 401060, D-8000 München 40 (DE)**

(72) Erfinder: **Schörwerth, Mathias, Lilienstrasse 3, D-8192 Geretsried 1 (DE)**

**EP 0 159 639 B1**

### Beschreibung

Die Erfindung betrifft eine Befestigungsanordnung nach dem Gattungsbegriff des Patentanspruches 1.

Bei einer bekannten Befestigungsanordnung für Bremsscheiben (DE-A 28 28 137) ist ein sogenannter Wellenbremsscheibenkörper, welcher getrennt vom Laufrad des Schienenfahrzeuges besteht, mittels mehrerer Gewindsbolzen am Nabenkörper einer abzubremsenden Welle befestigt. Die Gewindebolzen durchsetzen Bohrungen der als Tragkörper wirkenden Nabe und sind hierin jeweils von einer Gleitbuchse geführt. Wellenbremscheiben bzw. Achsbremsscheiben der hierbei verwendeten Konstruktion sind im Bereich ihres radialinnen liegenden Umfanges gegenüber dem Tragkörper, d.h.gegenüber der Nabe, in gewisser Weise geführt, so daß radiale Dehnungsbewegungen möglich sind. Im Bereich stärkster Erwärmung des Wellenbremsscheibenkörpers, d.h. im Bereich des Außenumfanges desselben, ist keinerlei radiale Führung vorgesehen, obwohl gerade in diesem Bereich infolge erhöhter Umfangsgeschwindigkeit höhere, durch Reibung hervorgerufene Temperaturen auftreten. Auch ist die einseitige Befestigung mit Hilfe der Gewindebolzen nicht frei von Problemen, da einseitige Biegemomente auftreten können.

Bekannt ist ferner eine Befestigungsanordnung (DE-A-12 58 444) für Bremsscheiben, bei welcher die Verbindung zwischen Bremsscheibenring und Radkörper aus einer Büchse mit einer in radialer Richtung nach außen offenen Langlochführung besteht, in welcher ein Gleitstein in radialer Richtung bewegbar eingesetzt ist. Die beiden Bremsscheibenringe sind getrennt von den Gleitsteinen mittels herkömmlicher Schrauben miteinander verbunden, wobei die Bremsscheibenringe im Bereich von Ausnehmungen des Laufrades des Schienenfahrzeuges miteinander verschraubt sind. Eine derartige Anordnung ist in baulicher Hinsicht verhältnismäßig aufwendig, da für die Führung der Bremscheibenringe als auch für deren Befestigung gesonderte Elemente verwendet werden.

Bekannt sind ferner zur Befestigung von Bremsscheibenringen an einem Tragkörper dienende Schraubenelemente (DE-A 21 33 235), welche in Form von sogenannten Paßschrauben oder als Durchgangsschrauben den Tragkörper durchsetzen und an ihren entgegengesetzten Enden jeweils die Hälfte von Bremsscheibenringen verspannen. Die Durchgangsschrauben gestatten Bewegungen der Bremsscheibenringhälften relativ zum Tragkörper der Bremsscheibenanordnung, wobei diese Relativbewegung ohne Orietierung ist, während die gleichzeitig zur Befestigung der Bremsscheibenringhälften dienenden Paßschrauben eine relative Verschiebung ausschalten. Durch eine vorbestimmte Positionierung von Paßschrauben und Durchgangsschrauben der vorstehend genannten Art ist es hierdurch möglich, in zwei Hälften aufgeteilte Bremsscheibenringe "atmen" zu lassen, wenn die Bremsscheibenringe während des Bremsvorganges einer starken Erwärmung und einer nachfolgenden Abkühlung ausgesetzt werden.

Die Durchgangsschrauben, welche ein gewisses "Spiel" für die Relativbewegung zwischen Bremsscheibenringhälften und Tragkörper vermitteln, können ohne Paßschrauben nicht verwendet werden, insbesondere nicht bei einteiligen Bremsscheibenringen, also ungeteilten Bremsscheiben auf dem gesamten Umfang, da die Gefahr von Entstehung unkontrollierter Bewegung existiert. Die durch die Erwärmung während des Abbremsens hervorgerufenen Relativbewegungen können bei Verwendung von Durchgangsschrauben allein dazu fühen, daß sich eine gewisse "unrunde" Lage der Bremsscheibenringe einstellt, was natürlich bei Rotationskörpern der bestehenden Art äußerst unerwünscht ist. Die Verwendung von Paßschrauben alleine ist im gleichen Maße nicht möglich, da zur Vermeidung von Spannungsrissen die Möglichkeit einer gewissen Relativbewegung zwischen den tragenden und den getragenen Teilen möglich sein muß. Dieses Problem stellt sich insbesondere bei durchgehenden Bremsscheibenringen, welche an beiden Seiten eines Tragkörpers, so an den Seiten eines Radkörpers, vorgesehen sind.

Davon ausgehend besteht die Erfindung darin, eine Befestigungsanordnung der in Rede stehenden Art so auszugestalten, daß Bremsscheibenringe so an ihrem Tragkörper befestigt werden können, daß die im Verlaufe der Erwärmung und Abkühlung hervorgerufenen Relativbewegungen "orientiert" sind. Es soll vermieden werden, daß die Bremsscheibenringe bzw. -abschnitte "unrunde" Lagen auf ihrem Tragkörper einnehmen, insbesondere bei Scheibenbremsanordnungen von mit hoher Geschwindigkeit fahrenden Schienenfahrzeugen, welche hohen thermischen Belastungen ausgesetzt sein können.

Zur Lösung dieser Aufgabe dienen die Merkmale nach dem Kennzeichnungsteil des Patentanspruches 1.

Die verwendeten Gleitpaßschrauben mit ihren Gleitbuchsen ermöglichen eine gezielte bzw. orientierte relative Verschiebung der Bremsscheibenringe bzw. -abschnitte in ihrer Lage am Tragkörper, da ein unkontrolliertes seitliches Auswandern nicht möglich ist. Durch die flächige Paarung der Anflächungen des Mittelschafts der Gleitpaßschrauben gegenüber den diese aufnehmenden Innenflächen der Gleitbuchse ist gewährleistet, daß die Richtung der radialen Beweglichkeit exakt festgelegt ist, da die Gleitbuchse ihrerseits innerhalb des Tragkörpers eine exakt vorher-zubestimmende Lage besitzt. Auf diese Weise kann in Kombination mit anderen Befestigungsschrauben, so in Kombination mit Durchgangsschrauben oder auch in Kombination mit Paßschrauben eine erwünschte relative Beweglichkeit der Bremsscheibenringe bzw. -abschnitte herbeigeführt werden, ohne daß die Gefahr besteht, daß die Bremsscheibenanordnung "unrund" wird. Thermische Wechselbelastungen verbleiben demnach ohne nachteiligen Einfluß auf die rotationssymmetrische Anordnung der Bremsscheibenringe bezüglich des Tragkörpers, insbesondere bei Bremsscheibenringen einteiliger Konstruktion.

Die Erfindung ist nachfolgend anhand von Ausführungsbeispielen unter Bezugnahme auf die beigefügte Zeichnung erläutert.

Fig. 1 ist eine Schnittansicht nach Linie I -I in Fig. 2 durch eine Bremsscheibenanordnung, bei welcher Bremsscheibenringe mit Hilfe von Gleitpaßschrauben an beiden Seitenflächen eines Radkörpers eines Schienenfahrzeugs befestigt sind;

Fig. 2 ist eine verkleinerte, in Fig. 1 von links gesehene Seitenansicht der Befestigungsanordnung;

Fig. 3 ist eine der Fig. 1 vergleichbare Schnittansicht einer weiteren Ausführungsform;

Fig. 4 ist eine der Fig. 2 vergleichbare Seitenansicht der Befestigungsanordnung nach Fig. 3;

Fig. 5 ist eine Einzelansicht einer Gleitpaßschraube mit/ auf den Mittelabschnitt derselben aufgeschobener Gleitbuchse;,

Fig. 6 ist eine Schnittansicht nach Linie VI - VI in Fig. 5;

Fig. 7 ist eine Einzelansicht der Gleitbuchse;

Fig. 8 ist eine in Fig. 7 von links gesehene Stirnansicht der Gleitbuchse;

Fig. 9 ist eine Einzelansicht der Gleitpaßschrauben ohne aufgeschobene Gleitbuchse;

Fig. 10 ist eine Schnittansicht nach Linie X - X in Fig. 9;

Fig. 11 ist eine der Fig. 1 vergleichbare Schnittansicht einer weiteren Ausführungsform nach der Erfindung;

Fig. 12 ist eine der Fig. 2 vergleichbare Ansicht der Befestigungsanordnung nach Fig. 11;

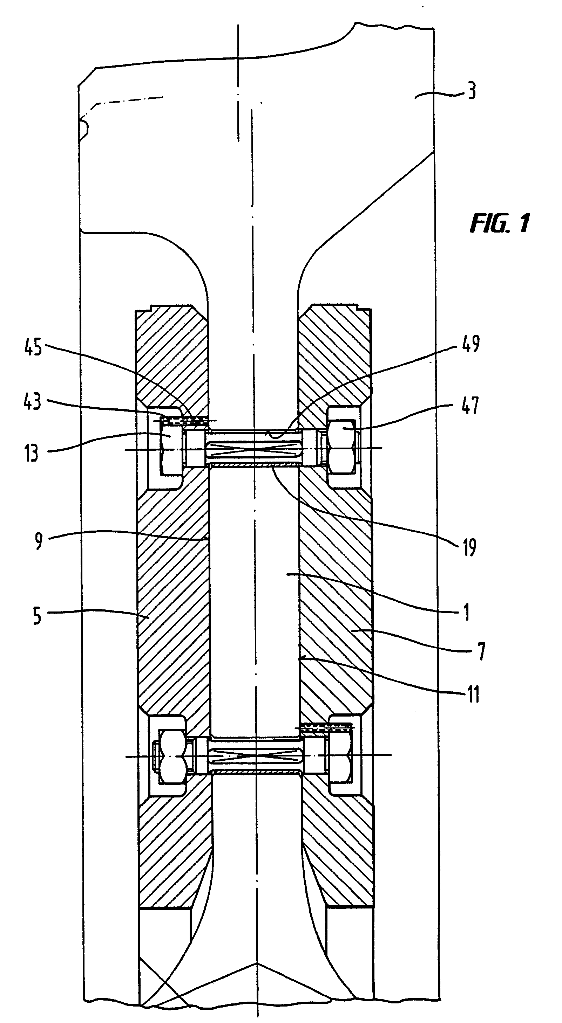

In Fig. 1 der Zeichnung ist in Schnittdarstellung die Hälfte eines Radkörpers dargestellt, welcher eine Radscheibe 1, einen (nicht dargestellten) Nabenteil und einen Laufring 3 aufweist. An den beiden Seiten des Laufrings 3 sind Bremsscheibenringe und 5 und 7 in nachfolgend beschriebener Weise befestigt. Die Bremsscheibenringe 5 und 7 bestehen zum Beispiel aus Graugußmaterial und werden durch seitlich einwirkende (nicht dargestellte) Bremsbeläge einer Scheibenbremsanordnung beaufschlagt, wenn der Radkörper abzubremsen ist.

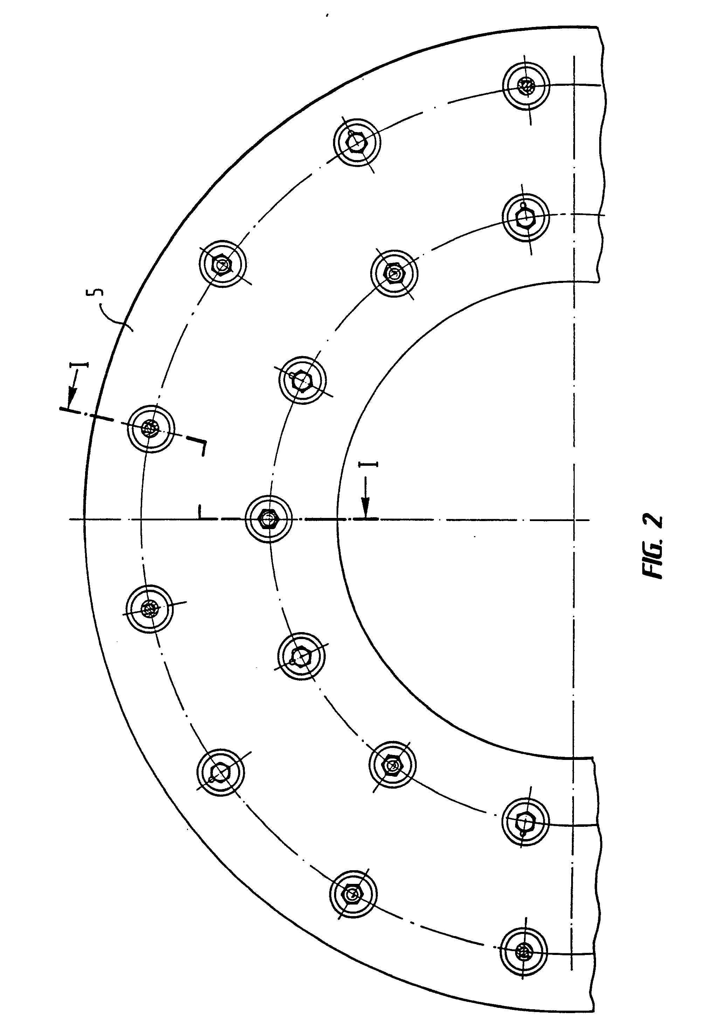

Die beiden Bremsscheibenringe 5 und 7 können mehrteilig ausgebildet sein, sie können jedoch auch die aus Fig. 2 ersichtliche einteilige, d.h. ringförmig durchgehende Gestaltung besitzen. Die Bremsscheibenringe sind an die Seitenflächen 9 und 11 der Radscheibe 1 angelegt und sind mittels nachfolgend im einzelnen beschriebener Gleitpaßschrauben 13 miteinander verbunden. Jede der Gleitpaßschrauben 13 erstreckt sich durch Bohrungen der Bremsscheibenringe 5 und 7, wobei Paßabschnitte 15 und 17 der Gleitpaßschraube bündig in den zugeordneten Bohrungen der Bremsscheibenringe aufgenommen sind. Die Gleitpaßschrauben 13 sind also ohne Spiel in den Bremsscheibenringen 5 und 7 geführt; Bewegungen der Bremsscheibenringe übertragen sich demnach auf die Gleitpaßschrauben 13, wie nachfolgend erläutert ist.

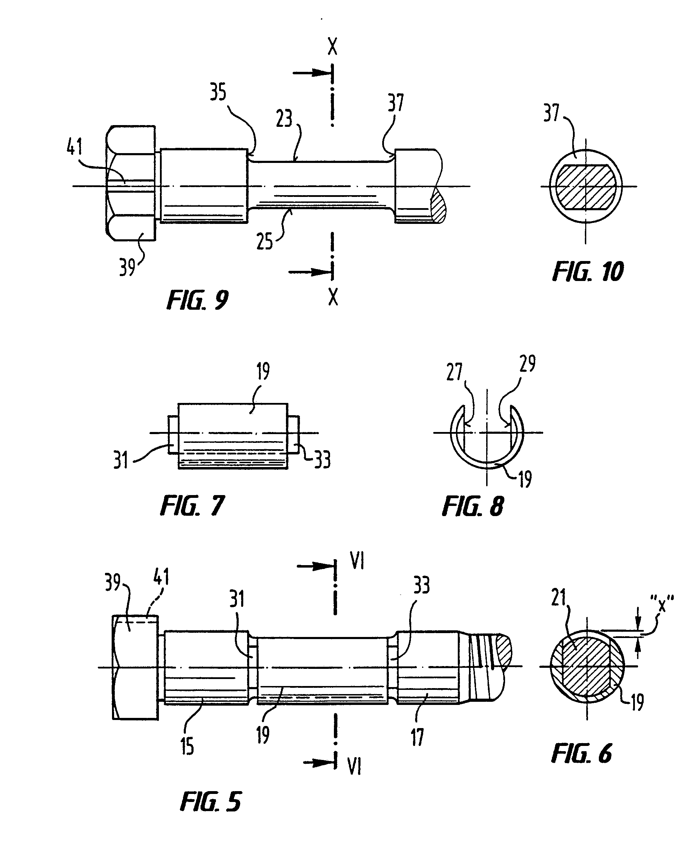

Wie die Einzelansichten aus Fig. 5-8 erkennen lassen, wirkt die Gleitpaßschraube 13 mit einer Gleitbuchse 19 zusammen. Der Mittelabschnitt 21 besitzt zwei parallel zueinander sich erstreckende seitliche Anflächungen 23 und 25, auf welche die ebenen Innenflächen 27 und 29 der Gleitbuchse 19 aufschiebbar sind. Die Gleitbuchse 19 ist zu diesem Zweck im wesentlichen U-förmig ausgestaltet, derart, daß ihre beiden Seitenteile den Mittelabschnitt 21 der Gleitpaßschraube 13 seitlich umfassen. Die Gleitbuchse 19 kann somit, wie Fig. 6 der Zeichnung veranschaulicht, auf den Mittelabschnitt aufgeschoben werden, wenn die Innenflächen 27 und 29 der Gleitbuchse 19 parallel zu den Anflächungen 23 und 25 liegen. Da die Gleitbuchse 19 U-Form besitzt, ist sie in einer Richtung offen, so daß der Mittelabschnitt 21 und somit die Gleitpaßschraube 13 Relativbewegungen zur Gleitbuchse 19 ausführen können, wie nachfolgend erläutert ist.

Wie die Fig. 5,7 und 8 erkennen lassen, trägt die Gleitbuchse 19 an ihren beiden Stirnseiten in Verlängerung der Innenflächen 27 und 29 achsial auskragende Zungen 31 bzw. 33, welche bei Aufschieben der Gleitbuchse 19 auf den Mittelabschnitt 21 in bündige Anlage mit dem Bund 35 bzw. 37 des Paßabschnittes 15 bzw. 17 gelangen. Die Zungen 31 und 33 legen die achsiale Lage der Gleitbuchse auf dem Mittelabschnitt der Gleitpaßschraube 13 fest, verhindern jedoch nicht eine Relativbewegung der Gleitpaßschraube 13, da sie im Bereich des Bunds 35 bzw. 37 der Gleitpaßschrauben ausreichend Spiel gegenüber der den Paßabschnitt 15 bzw. 17 aufnehmenden Bohrung des Bremsscheibenrings 5 bzw. 7 besitzen, dies, obgleich sie sich etwas in den Bereich der Bohrung hinein erstrecken (Fig. 1). In anderen Worten, obwohl der Paßabschnitt 15 bzw. 17 in der aus Fig. 1 der Zeichnung ersichtlichen Weise nicht exakt bis an die Seitenflächen 9 bzw. 11 herangeführt ist und sich die Zungen 31 und 33 am Bund 35 bzw. 37 abstützen, ist eine radial gerichtete Relativverschiebung der Gleitpaßschraube 13 und der sie tragenden Bremsscheibenringe 5 und 7 relativ zu der in der Radscheibe 1 stationär gehaltenen Gleitbuchse 19 möglich.

Die Gleitpaßschraube 13 besitzt einen Kopf 39 mit einer am Außenumfang des Kopfes verlaufenden Nut 41 (Fig. 5), durch welche sich in der Montageposition der Gleitpaßschraube ein Sicherungsstift 43 (Fig. 1) erstreckt. Der Sicherungsstift 43 greift in die Nut 41, um den Kopf 39 und somit die Gleitpaßschraube 13 gegenüber Drehung zu sichern und verläuft in einer im Bremsscheibenring 5 bzw. 7 hierzu vorhergesehenen Bohrung 45.

Am entgegengesetzten Ende der Gleitpaßschraube 13 ist eine Mutter 47 vorgesehen. Diese dient zum Verspannen der beiden Bremsscheibenringe 5 und 7 gegenüber der Radscheibe 1. Gleichzeitig vermittelt die Mutter 47 gegenüber der Seitenfläche des Bremsscheibenringes 5 bzw. 7 starke Reibung, was zusätzlich zur Drehsicherung der Gleitpaßschraube 13 beiträgt.

Es wurde vorstehend dargetan, daß die beiden Bremsscheibenringe 5 und 7 zusammen mit der von ihnen bündig getragenen Gleitpaßschraube Relativbewegungen bezüglich der Radscheibe 1 d.h. bezüglich der von der Radscheibe getragenen Gleitbuchse 19 auszuüben vermögen. Diese Relativbewegung ist deshalb möglich, weil die Gleitbuchse selbst in der sie aufnehmenden Bohrung 49 (Fig.1) der Radscheibe 1 bündig gehalten ist und weil sich im Bereich der Öffnung der U-förmigen Gleitbuchse ausreichend Freiraum für eine Relativbewegung der Gleitpaßschraube 13 befindet. Durch die Position der Gleitbuchse bzw. der Öffnung derselben kann demnach die relative Bewegung der Bremsscheibenringe 5 und 7 bei Erwärmung derselben vorbestimmt werden. In der Anordnung nach Fig. 1 und 2 der Zeichnung sind beidseitig der Radscheibe 1 einteilige Bremsscheibenringe 5 und 7 vorgesehen, d.h. die Ringform der Bremsscheibenringe ist nicht unterbrochen. Die Bremsscheibenringe sind durch eine Vielzahl von Gleitpaßschrauben 13 der vorstehend beschriebenen Konstruktion miteinander verbunden, wobei die Ausrichtung der Gleitpaßschrauben abwechselnd umgekehrt ist. Wie Fig. 1 der Zeichnung erkennen läßt, ist der Kopf der in der Darstellung oberen Gleitpaßschraube dem linksseitigen Bremsscheibenring 5 zugeordnet, während der Kopf der in der Darstellung unteren Gleitpaßschraube dem rechtsseitigen Bremsscheibenring 5 zugeordnet ist usw. Diese wechselweise Anordnung der Gleitpaßschrauben ist aus Fig. 2 der Zeichnung ersichtlich. Die Gleitbuchsen 19 sind im allgemeinen so ausgerichtet, daß ihre aus Fig. 8 ersichtliche Öffnung radial nach außen gerichtet verläuft, derart, daß sich die radialen Mittellinien im Mittelpunkt der Bremsscheibenringe treffen. Auch die Gleitpaßschrauben 13 müssen ihrer Lage entsprechend fixierbar sein, d.h., daß die Position der Nut 41, die Position der Bohrung 45 und die Ausrichtung der Anflächungen 23 und 25 so abgestimmt sind, daß die Gleitpaßschrauben in der Montageposition eine radial nach außen gerichtete Relativbewegung innerhalb des aus Fig. 1 ersichtlichen Freiraums "x" auszuführen vermögen.

Durch die vorstehend beschriebene Anordnung der Gleitpaßschrauben 13 ist es somit möglich, nicht nur mehrteilige, sondern auch einteilige Bremsscheibenringe so auf der Radscheibe 1 zu halten, daß diese "atmen" können, ohne daß es zu Zerstörungen infolge von Wärmespannungen kommt.

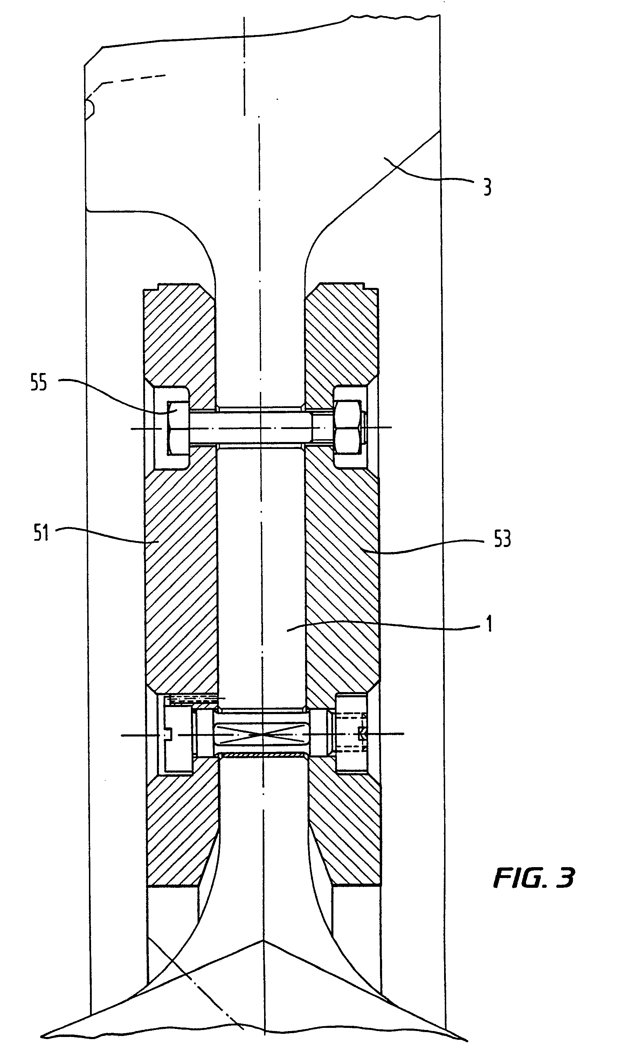

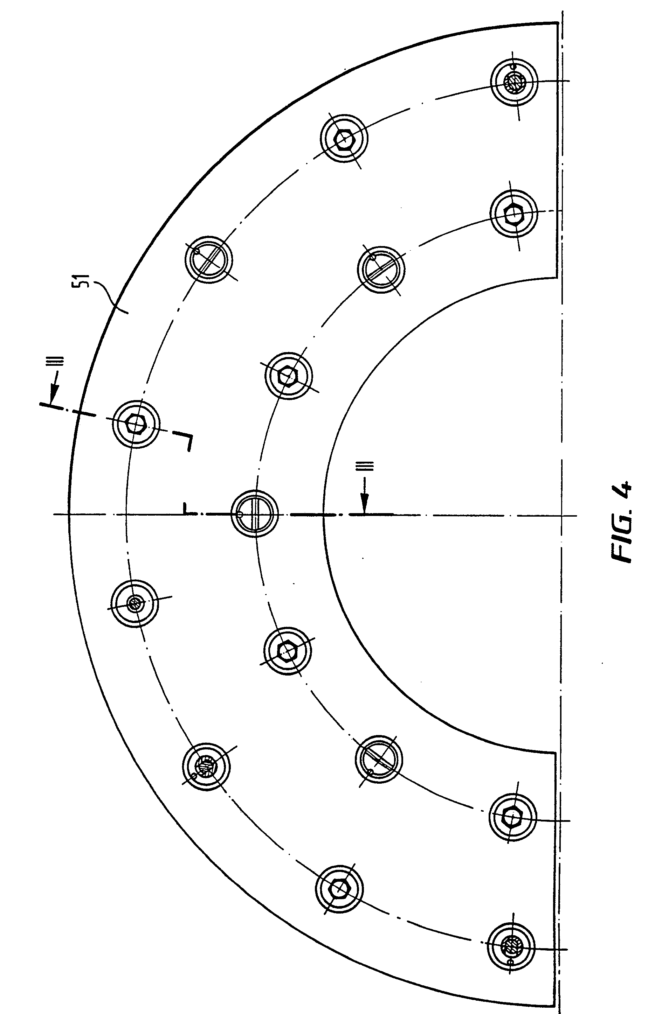

In Fig. 3 und 4 ist eine alternative Verwendung der Gleitpaßschrauben bei geteilten Bremsscheibenringen wiedergegeben. Die in Fig. 3 dargestellten Bremsscheibenringhälften sind mit abwechselnd vorgesehenen Gleitpaßschrauben 13 und sogenannten Durchgangsschrauben 55 miteinander verbunden. Die in der Darstellung nach Fig.3 obere Schraube ist als Durchgangsschraube 55 ausgebildet, welche sich dadurch kennzeichnet, daß sie ohne Buchse in die Bohrung der Radscheibe 1 und mit einem gewissen Spiel in die Bohrungen der Bremsscheibenringhälften 51 und 53 eingesetzt ist. Die Durchgangsschraube 55 von an sich bekannter Konstruktion besitzt demnach keine in der Richtung festgelegte Führung bei Relativbewegung zwischen den Bremsscheibenringhälften und der Radscheibe 1, d.h., daß sich die Durchgangsschraube innerhalb der sie aufnehmenden Bohrung 49 allseitig, also nicht nur radial nach außen bewegen läßt. Wie aus Fig. 4 der Zeichnung ersichtlich ist, sind abwechselnd Gleitpaßschrauben und Durchgangsschrauben auf zwei Kreisen der Bremsscheibenringhälfte 51 vorgesehen; es ist auch möglich, die Folge der verwendeten Schrauben zu ändern, um eine erwünschte "Atmung" der Bremsscheibenringhälften vorzubestimmen. Es ist auch möglich, im Mittelbereich der Bremsscheibenringhälften Paßschrauben vorzusehen, welche keinerlei Relativbewegung der Bremsscheibenringhälften zulassen, während an den beiden Enden der Bremsscheibenringhälften Gleitpaßschrauben (ggfs. in Verbindung mit Durchgangsschrauben) verwendet werden, um ein radiales Spreizen der Enden der Bremsscheibenringhälften 51 bzw. 53 herbeizuführen.

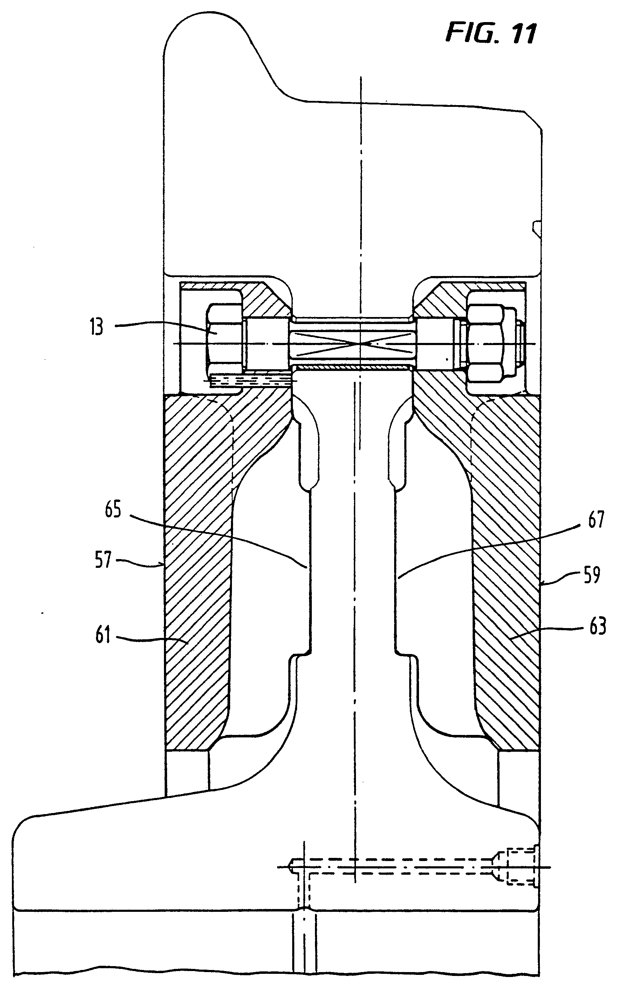

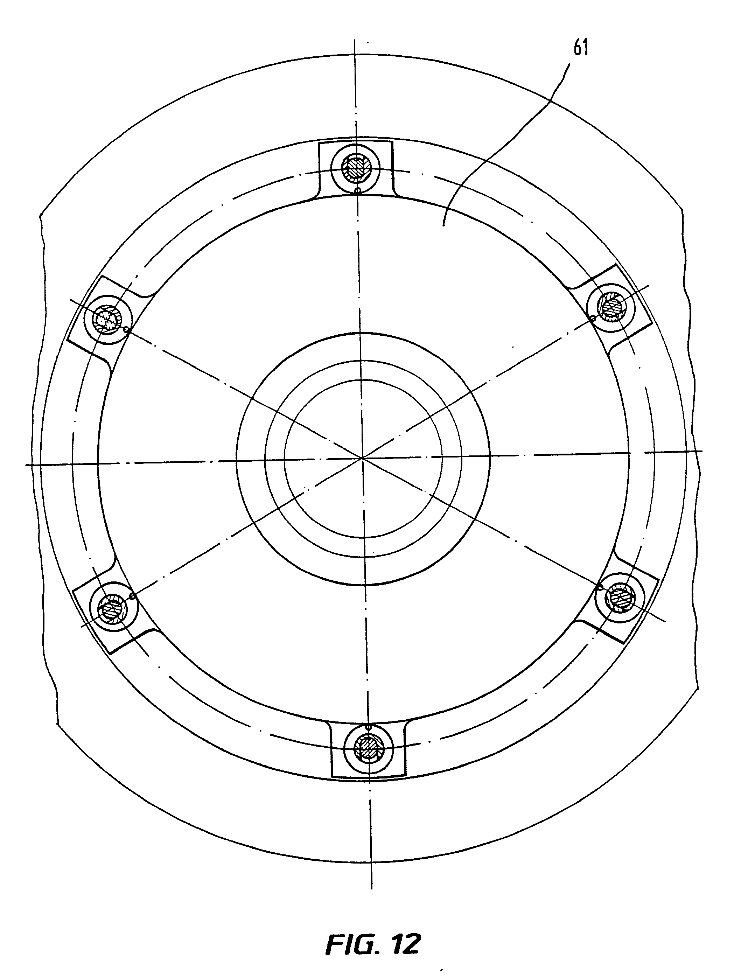

Die Fig. 11 und 12 veranschaulichen die Verbindung von Gleitpaßschrauben 13, bei welcher diese radial außerhalb der seitlichen Reibflächen 57 und 59 von Bremsscheibenringen 61 und 63 vorgesehen sind, also außerhalb desjenigen Flächenbereiches, an welchem die Bremsbeläge der Bremsscheibenanordnung zur Wirkung gelangen. Fig. 12 veranschaulicht, daß die Bremsscheibenringe um einen Winkelabstand zueinander befindliche, radial auskragende Lappen besitzen, welche von den Gleitpaßschrauben in der aus Fig. 11 ersichtlichen Weise durchsetzt sind. Auf der Radscheibe 1 stützen sich die Bremsscheibenringe 61 und 63 mit Hilfe von Rippen 65 und 67 ab.

Es wurde vorstehend aufgezeigt, daß die Gleitpaßschrauben z. B. bei der Ausführungsform nach Fig. 1, 3 etc. bündig in zugeordnete Bohrungen von Bremsscheibenringen eingesetzt sind, während der Mittelabschnitt der Gleitpaßschrauben mit auf ihr aufgeschobener Gleitbuchse in die Bohrung der Radscheibe eingeführt ist. Vorzugsweise ist der Durchmesser des Mittelabschnitts der Gleitpaßschraube etwas kleiner als der Durchmesser der Bohrung in der Radscheibe, da der Mittelabschnitt mit der ihn umgebenden Gleitbuchse in die Bohrung der Radscheibe eingesetzt werden muß. Nur durch die offene Konfiguration der Gleitbuchse, welche auch als Gleitschale bezeichnet werden kann, ist es ermöglicht, daß sich der Mittelabschnitt um das im Bereich der Öffnung der Gleitbuchse bestehende Spiel bewegen kann, wie durch das Maß "x" in Fig. 6 veranschaulicht ist. Da die Durchmesser der Bohrungen in den Bremsscheibenringen 5 und 7 und in der Radscheibe 1 vorzugsweise gleich sind, ist es möglich, die Bohrungen bei ein und demselben Arbeitsvorgang zu bohren und zu reiben. Bei der Ausführungsform nach Fig. 1 geschieht dies dadurch, daß die beiden Bremsscheibenringe 5 und 7 mittels geeigneter Spannwerkzeuge gegenüber der Radscheibe 1 fixiert werden, so daß während ein und desselben Arbeitsvorganges die Bohrungen durchgehend gebohrt bzw. gerieben werden können. Dies trägt nicht nur zu einer Vereinfachung der Herstellung der Bremsscheiben bei, gleichzeitig wird äußerste Genauigkeit in der Passung aller Gleitpaßschrauben zueinander erreicht.

**Bezugszeichenliste**

1 Radscheibe
3 Laufring
5 Bremsscheibenring
7 Bremsscheibenring
9 Seitenfläche
11 Seitenfläche
13 Gleitpaßschraube
15 Paßahschnitt
17 Paßabschnitt
19 Gleitbuchse
21 Mittelabschnitt
23 Anflächung
25 Anflächung
27 Innenfläche
29 Innenfläche
31 Zunge
33 Zunge
35 Bund
37 Bund
39 Kopf
41 Nut
43 Sicherungsstift
45 Bohrung
47 Mutter
49 Bohrung
51 Bremsscheibenringhälfte
53 Bremsscheibenringhälfte

55 Burchgangsschraube
57 Reibfläche
59 Reibfläche
61 Bremsscheibenring
63 Bremsscheibenring
65 Rippe
67 Rippe

**Patentansprüche**

1. Befestigungsanordnung für Bremsscheiben, insbesondere für Schienenfahrzeuge, mit zu beiden Seiten eines mit einer abzubremsenden Welle verbundenen, ringförmigen Tragkörpers angeordneten, geteilten oder einteiligen Bremsscheibenringen, welche mit Durchsteckschrauben am Tragkörper fixiert sind, wobei die Durchsteckschrauben Bohrungen der Bremsscheibenringe und des Tragkörpers durchsetzen und eine begrenzte Relativbewegung der miteinander verbundenen Teile zueinander gestatten, dadurch gekennzeichnet, daß die Durchsteckschrauben in Form von Gleitpaßschrauben (13) bestehen, welche in ihrem Schaftbereich zu beiden Seiten eines Mittelabschnittes (21) zwei daran angrenzende Paßabschnitte (15,17) aufweisen, wobei diese spielfrei je eine Bohrung eines Bremsscheibenringes (5,7) durchsetzen, und daß der Mittelabschnitt (21) der Gleitpaßschrauben jeweils unter Spiel die Bohrung (49) des Tragkörpers (Radscheibe 1) durchsetzt und von einer in der Bohrung (49) des Tragkörpers eingesetzten Gleitbuchse (19) beweglich geführt ist.

2. Befestigungsanordnung nach Anspruch 1, dadurch gekennzeichnet, daß die in die Bohrung (49) des Tragkörpers eingesetzten Gleitbuchsen (19) mit ebenen Innenflächen (27, 29) korrespondierende Anflächungen (23, 25) des Mittelabschnittes (21) der Gleitpaßschrauben (13) umfassen, und die Gleitbuchsen (19) radial nach außen gerichtet offen sind, derart, daß die Gleitpaßschrauben (13) mittels ihrer am Mittelabschnitt (21) ausgebildeten Anflächungen (23, 25) entlang der Innenflächen (27, 29) der Gleitbuchsen radial nach außen gerichtet innerhalb des Spiels der Bohrungen (49) bewegbar sind.

3. Befestigungsanordnung nach Anspruch 1 oder 2, dadurch gekennzeichnet, daß die Gleitpaßschrauben (13) mit Hilfe von Sicherungselementen (Sicherungsstift 43) drehfest gegenüber den Bremsscheibenringen (5, 7) fixierbar sind, derart, daß die Relativbewegung der Gleitpaßschrauben in Radialrichtung festgelegt ist.

4. Befestigungsanordnung nach einem der vorangehenden Ansprüche, gekennzeichnet durch wenigstens drei zur Verbindung eines Bremsscheibenringes (5, 7) mit einem Tragkörper dienende Gleitpaßschrauben (13).

5. Befestigungsanordnung nach einem der vorangehenden Ansprüche, dadurch gekennzeichnet, daß zur Verbindung der Bremsscheibenringe (5, 7) mit dem Tragkörper Gleitpaßschrauben (13) als auch mit Spiel in den Bohrungen der Bremsscheibenringe und des Tragköprers geführte Durchgangsschrauben (55) vorgesehen sind.

6. Befestigungsanordnung nach Anspruch 1 oder 2, dadurch gekennzeichnet, daß der Mittelabschnitt (21) der Gleitpaßschrauben (13) einen kleineren Durchmesser besitzt als die in den Bohrungen der Bremsscheibenringe (5, 7) geführten Paßabschnitte (15, 17).

7. Befestigungsanordnung nach Anspruch 6, dadurch gekennzeichnet, daß die Bohrungen in den Bremsscheibenringen (5, 7) und im Tragkörper gleichen Durchmesser besitzen, derart, daß sie innerhalb einer Spann- und Bearbeitungsvorrichtung gebohrt und gerieben werden können.

## Claims

1. Fixing arrangement for brake discs, particularly for rail vehicles, with divided or one-piece brake disc rings arranged on both sides of a ring-shaped supporting body connected to an axle to be braked, which brake disc rings are fixed to the supporting body with through bolts, the through bolts penetrating bores in the brake disc rings and the supporting body, and allowing a limited relative movement of the parts connected to each other, characterised in that the through bolts are in the form of sliding fit screws (13), which have, in their shank region on either side of a middle segment (21), two fitting segments (15, 17), bordering on said middle segment, such that these fitting segments each penetrate without play a bore in a brake disc ring (5, 7), and in that the middle segment (21) of each of the sliding fit screws penetrates the bore (49) of the supporting body (wheel disc 1) with clearance, and is guided in a movable manner by a slide bushing (19) inserted in the bore (49) of the supporting body.

2. Fixing arrangement according to claim 1, characterised in that the slide bushings (19) with flat inner surfaces (27, 29) inserted into the bore (49) of the supporting body surround corresponding flattened parts (23, 25) of the middle segment (21) of the sliding fit screws (13), and the slide bushings (19) are open radially outwards in such a way that the sliding fit screws (13) can be moved in a radially outward direction by means of their flattened parts (23, 25) formed on the middle segment (31) along the inner surfaces (27, 29) of the slide bushings within the clearance of the bores.

3. Fixing arrangement according to claim 1 or 2, characterised in that the sliding fit screws (13) are fixable with the aid of securing elements (securing bar (43)), in a torsionally secure manner in relation to the brake disc rings (5, 7), in such a way that the relative movement of the sliding fit screws is fixed in a radial direction.

4. Fixing arrangement according to one of the preceding claims, characterised by at least three sliding fit screws (13) serving to connect a brake disc ring (5, 7) to a supporting body.

5. Fixing arrangement according to one of the preceding claims, characterised in that sliding fit screws (13) and through bolts (55), which are guided with clearance in the bores of the brake disc rings and the supporting body, are provided for connecting the brake disc rings (5, 7) to the supporting body.

6. Fixing arrangement according to claim 1 or 2, characterised in that the middle segment (21) of the sliding fit screws (13) has a smaller diameter than the fitting segments (15, 17) which are guided in the bores of the brake disc rings (5, 7).

7. Fixing arrangement according to claim 6, characterised in that the bores in the brake disc rings (5, 7) and in the supporting body have the same diameter, such that they can be drilled and ground within one clamping and processing device.

## Revendications

1. Dispositif de fixation pour des disques de freins, en particulier pour des véhicules sur rails, avec des anneaux de disque de frein d'une pièce ou subdivisés, disposés de part et d'autre d'un corps de support annulaire relié à un arbre à freiner, lesdits anneaux étant fixés au corps de support à l'aide de boulons qui passent par des perçages ménagés dans les anneaux de disque de frein et dans le corps de support en autorisant un mouvement relatif limité entre les éléments reliés entre eux, caractérisé par le fait que les boulons sont constitués par des boulons ajustés à glissement (13) qui comportent dans la partie de la tige de boulon, et de part et d'autre d'une section médiane (21), deux sections ajustées (15, 17) qui en sont voisines, et dont chacune passe, sans jeu, par un perçage d'un anneau de disque de frein (5, 7), et que chaque section médiane (21) des vis ajustées à glissement traverse avec jeu le perçage (49) du corps de support (disque de roue 1) et est guidée de façon mobile par une douille de glissement (19) montée dans le perçage (49) du corps de support.

2. Dispositif de fixation selon la revendication 1, caractérisé par le fait que les douilles de glissement (19) qui sont montées dans le perçage (49) du corps de support, entourent par des surfaces intérieures planes (27, 29) des méplats (23, 25) de la section médiane (21) des boulons ajustés à glissement (13) et que les douilles de glissement (19) sont ouvertes radialement vers l'extérieur, la réalisation étant telle que les boulons ajustés à glissement (13) sont susceptibles, à l'aide des méplats (23, 25) ménagés dans la section médiane (21), de se déplacer radialement vers l'extérieur, le long des surfaces intérieures (27, 29) des douilles de glissement, et cela dans les limites du jeu des perçages (49).

3. Dispositif de fixation selon la revendication 1 ou 2, caractérisé par le fait que les boulons ajustés à glissement (13) sont susceptibles d'être fixés en rotation par rapport aux anneaux de disque de frein (5, 7), à l'aide d'éléments de sécurité (chevilles de sécurité 43), et cela de manière à fixer le mouvement relatif des boulons ajustés à glissement dans le sens radial.

4. Dispositif de fixation selon l'une des revendications précédentes, caractérisé par au moins trois boulons ajustés à glissement (13), qui servent à relier un anneau de disque de frein (5, 7) à un corps de support.

5. Dispositif de fixation selon l'une des revendications précédentes, caractérisé par le fait que l'on prévoit, pour relier les anneaux de disque de frein (5, 7) avec le corps de support, des boulons ajustés à glissement (13) ainsi que des boulons (55) guidés avec jeu dans les perçages ménagés dans les anneaux de disque de frein et dans le corps de support.

6. Dispositif de fixation selon la revendication 1 ou 2, caractérisé par le fait que la section médiane (21) des boulons ajustés à glissement (13) ont un diamètre qui est inférieur à celui des sections ajustées (15, 17) qui sont guidées dans les perçages des anneaux de disque de frein (5, 7).

7. Dispositif de fixation selon la revendication 6, caractérisé par le fait que les perçages ménagés dans les anneaux de disque de frein (5, 7) et dans le corps de support ont le même diamètre de manière à pouvoir être percés et alésés à l'aide d'un dispositif de serrage et d'usinage.

0 159 639

FIG. 1

FIG. 2

0 159 639

FIG. 3

**FIG. 4**

51

0 159 639

FIG. 9

FIG. 10

FIG. 7

FIG. 8

FIG. 5

FIG. 6

"x"

*FIG. 11*

61

**FIG. 12**